# EUROPEAN PATENT APPLICATION

(11) **EP 4 368 162 A1**
(43) Date of publication of application: **15.05.2024**
(21) Application number: 23209246.0
(22) Date of filing: 10.11.2023
(51) Int. Cl.: A61G 1/003, A61G 1/007, A61G 1/02, A61G 1/04, A61G 1/044

(54) **EXTRAPLANETARY REMOTE RESCUE SYSTEM**

(30) Priority: 11.11.2022 US 202217985262
(71) Applicant: Hamilton Sundstrand Corporation, Charlotte, NC 28217-4578 (US)
(72) Inventor: LUKER, Kelly, Glastonbury, CT, 06033 (US); ROHRIG, Jake, Simsbury, CT, 06070 (US)
(74) Representative: Dehns

(57) **Abstract**

A remote rescue vehicle for an extraplanetary environment includes a vehicle body (12), a drive mechanism (16, 22) connected to the vehicle body to convey the vehicle across an extraplanetary environment, and one or more lifting arms (24) operably connected to the vehicle body. The one or more lifting arms are configured to lift an incapacitated crew member into the vehicle body. A remote rescue vehicle system for an extraplanetary environment includes a remote rescue vehicle including a vehicle body, a drive mechanism connected to the vehicle body to convey the vehicle across an extraplanetary environment, and one or more lifting arms operably connected to the vehicle body. The one or more lifting arms are configured to lift an incapacitated crew member into the vehicle body. A control system is wirelessly connected to the remote rescue vehicle to control operation of the remote rescue vehicle.

## Description

### BACKGROUND

Exemplary embodiments pertain to the art of extraplanetary travel and exploration.

With the increase in human exploration to and inhabitation of the moon and other planets on the horizon, the eventuality exists of a crew member being injured or otherwise incapacitated when located remotely from a vehicle or habitat.

Current requirements exist for a 5^{th} percentile, or very small, sized crew member to rescue a 95^{th} percentile, or very large, sized crew member. Given that operations undertaken when in an extravehicular activity (EVA) suit are difficult, such a rescue by a relatively small crew member such as a 5^{th} percentile crew member would prove to be difficult. Further, in some instances a crew member may become incapacitated while located remotely from a vehicle or habitat, in a location that may be inaccessible to other crew members.

### BRIEF DESCRIPTION

In one aspect, a remote rescue vehicle for an extraplanetary environment includes a vehicle body, a drive mechanism connected to the vehicle body to convey the vehicle across an extraplanetary environment, and one or more lifting arms operably connected to the vehicle body. The one or more lifting arms are configured to lift an incapacitated crew member into the vehicle body

In embodiments, the one or more lifting arms are movable to secure the incapacitated crew member to the vehicle body.

In embodiments, the vehicle body is a basket.

In embodiments, one or more of a solar panel or a battery provide power to the vehicle.

In embodiments, the vehicle is configured for remotely controlled operation.

In embodiments, the remote control is achieved via a wireless connection between the vehicle and a control system.

In embodiments, the rescue vehicle is autonomously operated.

In embodiments, one or more of a hoist, a winch, a camera, or one or more sensors are operably connected to the vehicle body.

In embodiments, the drive mechanism includes a motor, and one or more of a plurality of wheels or a ski and track arrangement are operably connected to the motor to propel the vehicle.

In another aspect, a remote rescue vehicle system for an extraplanetary environment includes a remote rescue vehicle including a vehicle body, a drive mechanism connected to the vehicle body to convey the vehicle across an extraplanetary environment, and one or more lifting arms operably connected to the vehicle body. The one or more lifting arms are configured to lift an incapacitated crew member into the vehicle body. A control system is wirelessly connected to the remote rescue vehicle to control operation of the remote rescue vehicle.

In embodiments, the control system is a smart glove of an extra vehicular activity suit.

In embodiments, the smart glove utilizes one of gestures or voice commands.

In embodiments, the control system is connected to the remote rescue vehicle via a Bluetooth connection.

In embodiments, the one or more lifting arms are movable to secure the incapacitated crew member to the vehicle body.

In embodiments, the vehicle body is a basket.

In embodiments, a solar panel provides power to the vehicle.

In embodiments, the rescue vehicle is autonomously operated.

In embodiments, one or more of a hoist, a winch, a camera, or one or more sensors are operably connected to the vehicle body.

In embodiments, the drive mechanism includes a motor, and one or more of a plurality of wheels or a ski and track arrangement are operably connected to the motor to propel the vehicle.

### BRIEF DESCRIPTION OF THE DRAWINGS

The following descriptions should not be considered limiting in any way. With reference to the accompanying drawings, like elements are numbered alike:
FIG. 1 illustrates an embodiment of a crew rescue vehicle;
FIG. 2 illustrates another embodiment of a crew rescue vehicle;
FIG. 3 illustrates an incapacitated crew member secured in a crew rescue vehicle;
FIG. 4 schematically illustrates control of a crew rescue vehicle via a smart glove;
FIG. 5 schematically illustrates control of a crew rescue vehicle via a remote control device;
FIG. 6A schematically illustrates a robotic arm operably connected to a crew rescue vehicle;
FIG. 6B schematically illustrates a hoist or winch operably connected to a crew rescue vehicle;
FIG. 6C schematically illustrates a lamp operably connected to a crew rescue vehicle; and
FIG. 6D schematically illustrates a camera operably connected to a crew rescue vehicle.

### DETAILED DESCRIPTION

A detailed description of one or more embodiments of the disclosed apparatus and method are presented herein by way of exemplification and not limitation with reference to the Figures.

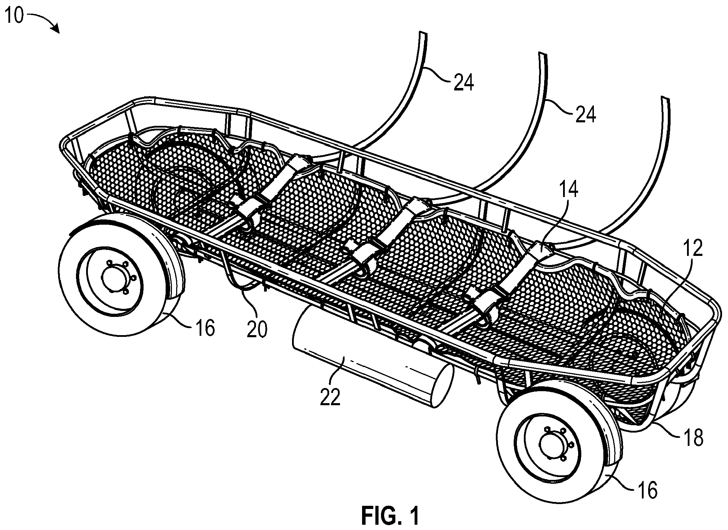

Referring to FIG. 1, illustrated is an embodiment of a crew rescue vehicle 10. The vehicle 10 includes a vehicle body, such as a basket 12, which may include straps 14, harnesses, hooks, or other devices to position and secure a crew member or other cargo in the basket 12. The vehicle 10 further includes a drive mechanism such as wheels 16 which are mounted to a support structure 18 at a bottom 20 of the basket 12. The wheels 16 are operably connected to one or more drive motors 22, which are operated to drive the wheels and thus the vehicle 10. In one embodiment, one or more wheels are movable about a wheel pivot (not shown) to steer the vehicle 10. In other embodiments, multiple drive motors 22 are utilized and operated independently to effect steering of the vehicle 10.

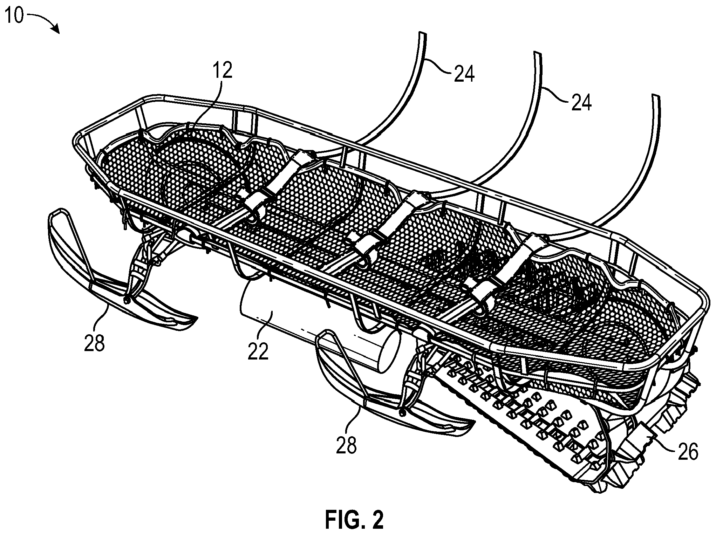

In another embodiment, as shown in FIG. 2 a track 26 and ski 28 are mounted to support structure 18. The track 26 is driven by the one or more drive motors 22 to propel the vehicle 10. The vehicle 10 may be steered by rotating the ski 28 about a ski pivot (not shown). In still other embodiments, the drive mechanism may utilize other components such as articulating legs or the like to drive and control movement of the vehicle 10.

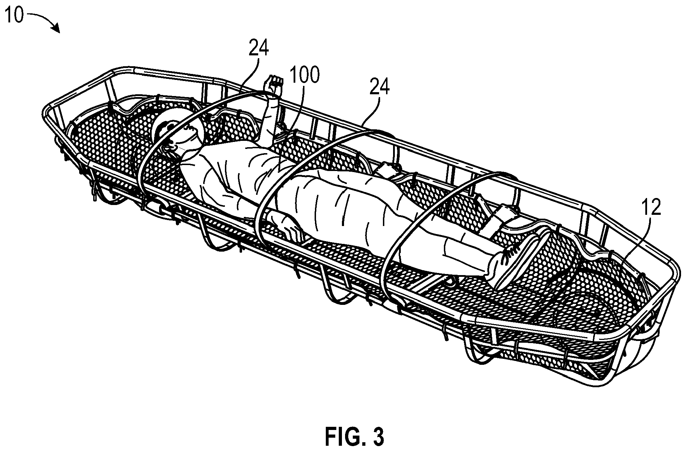

Referring again to FIG. 1, the vehicle 10 further includes a plurality of articulating lift arms 24 mounted to, for example, the basket 12 or the support structure 18. The lift arms 30 are movable to lift or otherwise move an incapacitated crew member into the basket 12. Referring to FIG. 3, once the incapacitated crew member 100 is in the basket 12, the lift arms 24 may be extended across the basket 12 to secure or restrain the crew member in the basket 12.

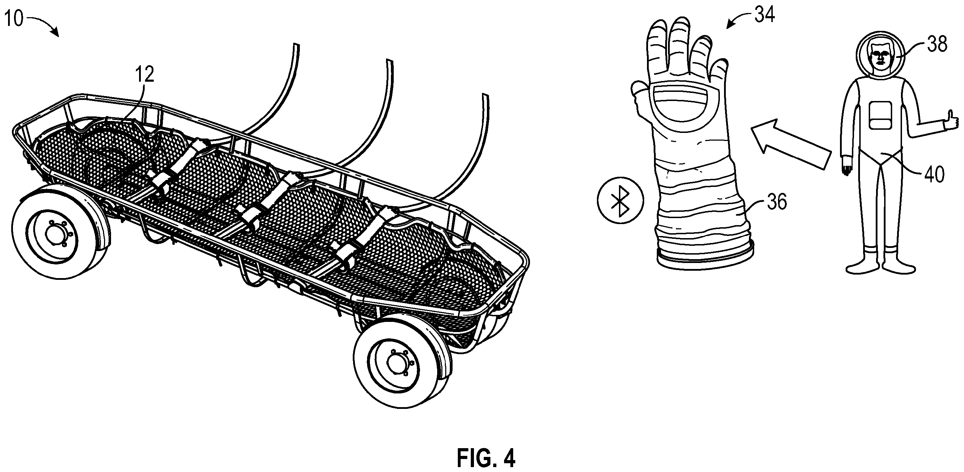

The vehicle 10 is part of a vehicle system 32 which also includes a control apparatus 34. The control apparatus 34 is operably connected to the vehicle 10 via a wireless connection, such as a Bluetooth connection so that the vehicle 10 can be operated remotely. Referring now to FIG. 4, in some embodiments the control apparatus 34 is a smart glove 36 of a crewmember 38 suit 40. The smart glove 36 may control operation of the vehicle 10 by, for example, gestures made by the crewmember 38 wearing the smart glove 36. Alternatively, the smart glove 36 may utilize voice commands communicated into the smart glove 36 by the crewmember 38. Such gestures or voice commands define commands for operating the vehicle 10, which are communicated to the vehicle 10 via the wireless connection.

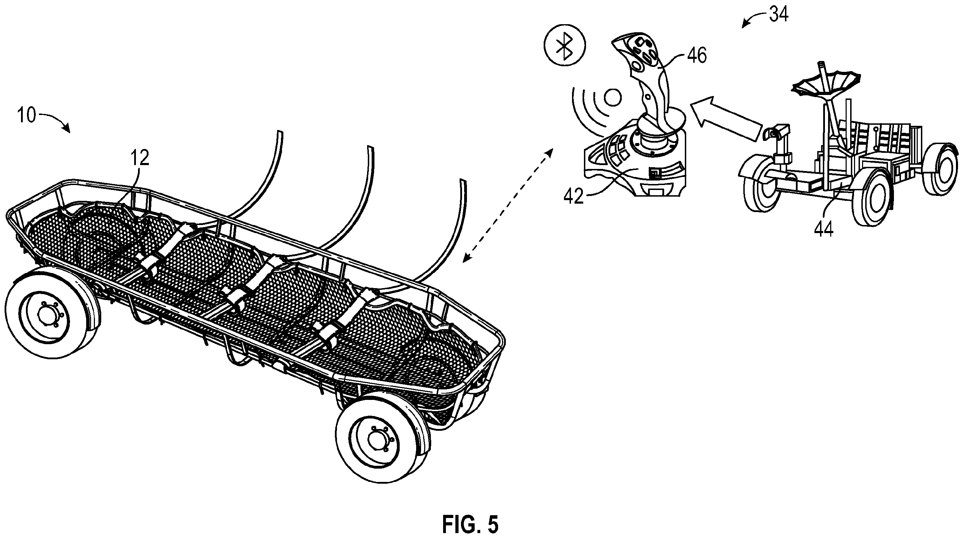

In another embodiment, such as illustrated in FIG. 5, the control apparatus 34 is a remote control 42 of a rover 44 or other piece of equipment. The remote control 42 may include a joystick 46 or other user interfaces which, when operated, transmit operation command to the vehicle 10 via the wireless connection.

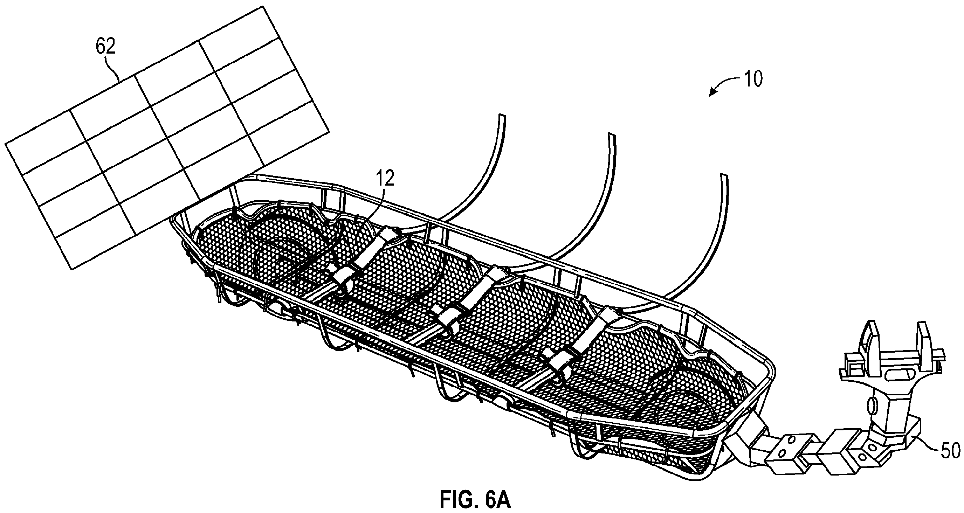

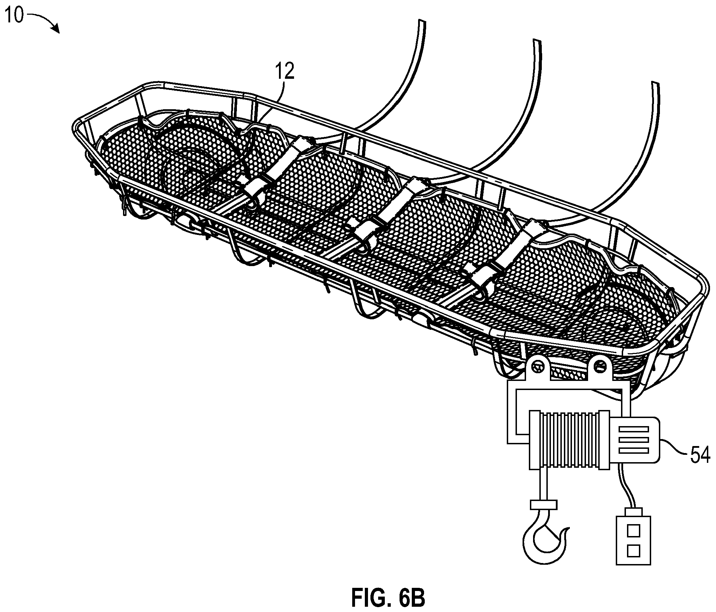

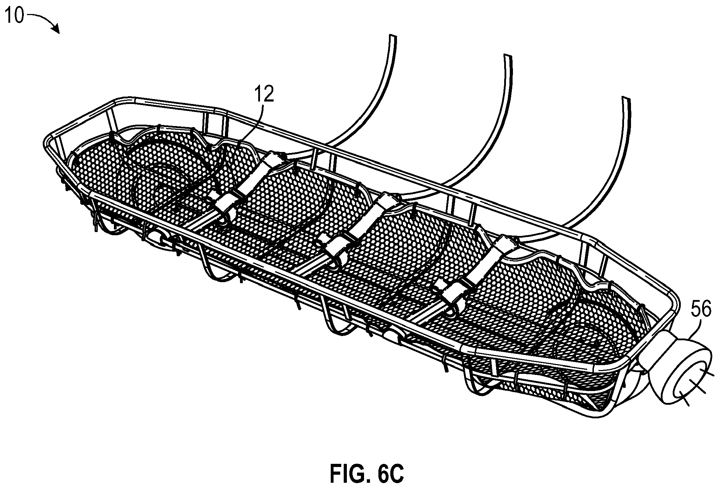

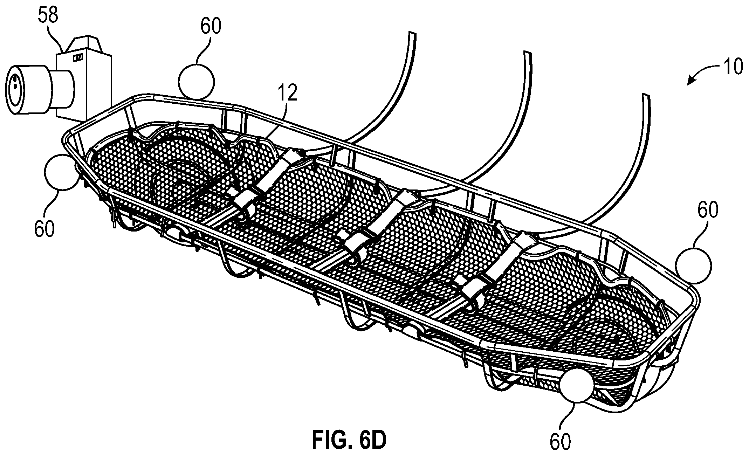

Referring again to FIGs. 6A-6D, the vehicle 10 is equipped with one or more ancillary components to aid in operation of the vehicle 10. The ancillary components may include one or more of robotic arms 50 as shown in FIG. 6A, a hoist or a winch 54 as shown in FIG. 6B, a lamp 56 illustrated in FIG. 6C, and a camera 58, and one or more sensors 60 illustrated in FIG. 6D. The sensors 60 may include position sensors proximity sensors, attitude sensors, or the like. The sensors 60 aid in navigation, and also in rescue operations utilizing the vehicle 10. In other embodiments, the vehicle 10 may be equipped with a radio transceiver and a controller, which may be utilized to control operation of the vehicle 10, and also for position determination and navigation of the vehicle 10. Referring again to FIG. 6A, the vehicle 10 may be further equipped with solar panels 62 to provide the necessary power for the power to drive mechanism and the one or more ancillary components. The vehicle 10 is lightweight and collapsible to allow for compact storage on, for example, the rover 44.

While in some embodiments the vehicle 10 is operated by a crewmember 38 via, for example, the smart glove 36 or remote control 42, in other embodiments the vehicle 10 may be self-guided to rescue an incapacitated crew member. In such embodiments, deployment of the vehicle 10 may be initiated by an alarm from the incapacitated crew member, which may be initiated by the incapacitated crew member, or alternatively, automatically by one or more biometric sensors on the incapacitated crew member. Once deployment is initiated, the vehicle 10 may self-navigate to the incapacitated crew member utilizing the camera 46, the one or more sensors 60 and the like to navigate to the incapacitated crew member. In such embodiments, the one or more sensors 60 may include sensors 60 utilized for simultaneous location and mapping (SLAM), when the vehicle 10 needs to find its way. The SLAM sensors may include the Global Positioning System (GPS), rotary encoders, infrared (IR), acoustic sensors (ultrasound, microphone, and sonar sensor), camera, inertial measurement unit (IMU), ultrawideband (UWB), acoustic, LiDAR, RADAR, and RGB-D sensors.

The disclosed vehicle 10 and vehicle system may be used to rescue any size crewmember (e.g., 5th percentile or 95th percentile). It can be used in hard-to-reach areas if crewmembers are separated with various attachment pieces such as robotic arms, hoist & winch, light, and camera. The camera in particular allows streaming the point of view of the rescue vehicle 10 to the crewmember 38 performing the rescue through either displays equipped on the spacesuit 40, or displays from where the rescue vehicle 10 is being operated. It preserves crew energy and is quicker than physically rescuing and hauling an incapacitated crewmember back to safety. This is superior to other rescue technology which relies on astronauts being able to reach each other & manually push & pull to rescue.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A remote rescue vehicle for an extraplanetary environment, comprising:
a vehicle body (12);
a drive mechanism (16, 22) connected to the vehicle body to convey the vehicle across an extraplanetary environment; and
one or more lifting arms (24) operably connected to the vehicle body, the one or more lifting arms configured to lift an incapacitated crew member into the vehicle body.

2. The remote rescue vehicle of claim 1, wherein the one or more lifting arms are movable to secure the incapacitated crew member to the vehicle body.

3. The remote rescue vehicle of claim 1 or 2, wherein the vehicle body is a basket.

4. The remote rescue vehicle of any preceding claim, further comprising one or more of a solar panel (62) or a battery to provide power to the vehicle.

5. The remote rescue vehicle of any preceding claim, wherein the vehicle is configured for remotely controlled operation.

6. The remote rescue vehicle of claim 5, wherein the remote control is achieved via a wireless connection between the vehicle and a control system.

7. The remote rescue vehicle of any of claims 1 to 4, wherein the rescue vehicle is autonomously operated.

8. The remote rescue vehicle of any preceding claim, further comprising one or more of a hoist, a winch (54), a camera (58), or one or more sensors (60) operably connected to the vehicle body.

9. The remote rescue vehicle of any preceding claim, wherein the drive mechanism comprises:
a motor (22); and
one or more of a plurality of wheels (16) or a ski and track arrangement operably connected to the motor to propel the vehicle.

10. A remote rescue vehicle system for an extraplanetary environment, comprising:
a remote rescue vehicle according to any preceding claim; and
a control system (34) wirelessly connected to the remote rescue vehicle to control operation of the remote rescue vehicle.

11. The remote rescue vehicle system of claim 10, wherein the control system is a smart glove (36) of an extra vehicular activity suit (40).

12. The remote rescue vehicle system of claim 11, wherein the smart glove utilizes one of gestures or voice commands.

13. The remote rescue vehicle system of claim 10, wherein the control system is connected to the remote rescue vehicle via a Bluetooth connection.
